# EUROPEAN PATENT APPLICATION

(11) **EP 2 947 131 A1**
(43) Date of publication of application: **25.11.2015**
(21) Application number: 14740307.5
(22) Date of filing: 15.01.2014
(51) Int. Cl.: C10G 2/00

(54) **HYDROCARBON SYNTHESIS REACTION APPARATUS**

(30) Priority: 17.01.2013 JP 2013006566
(71) Applicant: Japan Oil, Gas and Metals National Corporation, Minato-ku, Tokyo 105-0001 (JP); INPEX Corporation, Tokyo 107-6332 (JP); JX Nippon Oil & Energy Corporation, Chiyoda-ku Tokyo 100-8162 (JP); Japan Petroleum Exploration Co., Ltd., Tokyo 100-0005 (JP); Cosmo Oil Co., Ltd., Tokyo 105-8528 (JP); Nippon Steel & Sumikin Engineering Co., Ltd., Tokyo 141-8604 (JP)
(72) Inventor: MAEDA Yuuji, Tokyo 141-8604 (JP); MURATA Atsushi, Tokyo 141-8604 (JP); YAMADA Eiichi, Tokyo 141-8604 (JP); KATO Yuzuru, Tokyo 141-8604 (JP); ONISHI Yasuhiro, Mitaka-shi Tokyo 181-0015 (JP)
(74) Representative: Vossius & Partner Patentanwälte Rechtsanwälte mbB
(86) International application number: PCT/JP2014/050542
(87) International publication number: WO 2014/112510

(57) **Abstract**

A hydrocarbon synthesis reaction apparatus includes a reactor that brings a synthesis gas into contact with a slurry having a solid catalyst suspended in liquid hydrocarbons to synthesize hydrocarbons by the Fischer-Tropsch synthesis reaction; a cylindrical inner tube having a lower end arranged within the reactor at a predetermined distance from the bottom of the reactor; and a sparger that is arranged on an inner lower side of the inner tube and blows the synthesis gas toward the inside of the inner tube. A Fischer-Tropsch synthesis reaction region, to which the slurry including bubbles flows out from the inside of the inner tube through an upper end of the inner tube, is formed in a space between a virtual extension portion of the upper end of the inner tube and an inner surface of the reactor, in a state where the slurry is held within the reactor until the upper end of the inner tube is lower than the liquid level of the slurry.

## Description

### BACKGROUND OF THE INVENTION

### Field of the Invention

The present invention relates to a hydrocarbon synthesis reaction apparatus.

Priority is claimed on Japanese Patent Application No. 2013-006566, filed January 17,2013, the content of which is incorporated herein by reference.

### Background Art of the Invention

In recent years, as one of the methods for synthesizing liquid fuels from natural gas, the GTL (Gas-to-Liquids: liquid fuel synthesis) technique has been developed. In the GTL technique, natural gas is reformed to produce synthesis gas including carbon monoxide gas (CO) and hydrogen gas (H₂) as main components, hydrocarbons are synthesized by the Fischer-Tropsch synthesis reaction (hereinafter referred to as "FT synthesis reaction") with a catalyst using the synthesis gas as a feedstock, and the hydrocarbons are hydrogenated and fractionated to produce liquid fuel products, such as naphtha (raw gasoline), kerosene, gas oil, and wax.

In hydrocarbon synthesis reaction apparatuses for the FT synthesis reaction used for this GTL technique, hydrocarbons are synthesized by performing the FT synthesis reaction on the carbon monoxide gas and the hydrogen gas in the synthesis gas inside a bubble column slurry bed reactor in which a slurry having solid catalyst particles suspended in a liquid medium are held. In that case, as the hydrocarbon synthesis reaction apparatuses, upflow types in which the synthesis gas that is a feedstock is introduced from a lower portion of the reactor are used.

The synthesis gas ascends within the reactor as bubbles, the slurry is stirred by the ascent energy of the bubbles and the mixed and flowing state of the slurry is maintained. In order to continue the FT synthesis reaction properly and stably, the reaction pressure is set to a pressure higher than the normal pressure, and the reaction temperature is set to a temperature higher than the normal temperature.

In the related art, generally, a method of blowing synthesis gas from the entire bottom surface of the reactor for the purpose of uniformly distributing the catalyst of the reactor is taken as a method of blowing the synthesis gas toward the slurry within the reactor. However, if the reactor is made large and the amount of the catalyst increases, a problem occurs in that a drift is generated in the flow of the slurry or a part of the catalyst stagnates, and the slurry cannot be stirred well.

In order to prevent stagnation from occurring and to stir the slurry well, it is effective to separately provide an upward flow near the center of the reactor and a downward flow near the outer side of the reactor.

For this reason, the following Patent Document 1 or 2 suggests that upward and downward flows of slurry within a reactor are clearly classified by arranging a draft tube coaxially with the reactor within the reactor, using the inside of the draft tube as a space for upward flow of the slurry and using a space between the reactor and the draft tube as a space for downward flow of the slurry.

### PRIOR ART DOCUMENT

### Patent Document

Patent Document 1: PCT International Publication No.WO94/15160
Patent Document 2: PCT International Publication No. WO99/000191

### SUMMARY OF THE INVENTION

### Technical Problem

In the aforementioned related-art, the draft tube is arranged so that an upper end thereof extends to the liquid level of the slurry. Thus, a region where the synthesis gas supplied from the lower side of the draft tube comes into contact with the slurry, that is, a region where the FT synthesis reaction occurs is limited to an inner region of the draft tube. For this reason, although the slurry can be stirred well, the region where the FT synthesis reaction occurs becomes narrow. As a result, in order to widely secure the region where the FT synthesis reaction occurs as desired, the diameter of the reactor needs to be large. That is, the reactor needs to be made large.

The invention has been made in view of the above situation, and an object of the invention is to provide a hydrocarbon synthesis reaction apparatus that can stir a slurry well and can widely secure a region where the Fischer-Tropsch synthesis reaction occurs without increasing the size of a reactor.

### SOLUTION TO PROBLEM

The hydrocarbon synthesis reaction apparatus of the invention includes a reactor that brings a synthesis gas including carbon monoxide gas and hydrogen gas as main components into contact with a slurry having a solid catalyst suspended in liquid hydrocarbons to synthesize hydrocarbons by the Fischer-Tropsch synthesis reaction; a cylindrical inner tube having a lower end arranged within the reactor at a predetermined distance from the bottom of the reactor; and a sparger that is arranged on an inner lower side of the inner tube and blows the synthesis gas toward the inside of the inner tube. A Fischer-Tropsch synthesis reaction region, to which the slurry including bubbles flows out from the inside of the inner tube through an upper end of the inner tube, is formed in a space between a virtual extension portion of the upper end of the inner tube and an inner surface of the reactor, in a state where the slurry is held within the reactor until the upper end of the inner tube is lower than the liquid level of the slurry.

In the invention, the synthesis gas is jetted from the sparger that is arranged only on the inner lower side of the inner tube that is a part of the bottom of the reactor instead of the whole region of bottom of the reactor. Since the jetted synthesis gas is mixed with the slurry within the inner tube, and this mixed fluid has low specific gravity compared to the slurry that does not include bubbles, the mixed fluid forms an upward flow within the inner tube. When the ascending mixed fluid reaches the liquid level of the slurry, most bubbles escape from the mixed fluid. The mixed fluid from which most bubbles have escaped has almost the same specific gravity as that of the slurry that does not include bubbles. As a result, the mixed fluid forms a downward flow that is directed downward outside the inner tube, that is, at a position near the inner surface of the reactor.

In this way, a circulatory flow including the upward flow at a center position of the reactor and the downward flow at the position near the inner surface of the reactor is formed within the reactor. This circulatory flow becomes a stronger flow than that in the whole surface blowoff of jetting the synthesis gas from the whole region of the bottom of the reactor. The slurry can be stirred well by this strong circulatory flow. Additionally, when the mixed fluid including bubbles flows further upward from the upper end of the inner tube, the mixed fluid ascends while being diffused radially outward of the reactor. The mixed fluid diffused radially outward of the reactor is reversed in flow and flows downward without reaching the liquid level of the slurry, since the mixed fluid is caught in the downward flow outside the inner tube. That is, the slurry including bubbles flows out from the inside of the inner tube to the space between the virtual extension portion of the upper end of the inner tube and the inner surface of the reactor through the upper end of the inner tube, whereby this region also becomes a Fischer-Tropsch synthesis reaction region.

That is, the region where the Fischer-Tropsch synthesis reaction occurs is formed not only on the inside of the inner tube but also on the outside of the inner tube. As a result, the slurry can be stirred well, and the enough region where the Fischer-Tropsch synthesis reaction occurs can be reliably secured without making the reactor larger.

Additionally, in the above hydrocarbon synthesis reaction apparatus, it is preferable that the ratio of the diameter of the inner tube to the diameter of the reactor be 0.6 or more and 0.8 or less.

In this case, the downward flow that is formed outside the inner tube and mainly formed by the slurry can be secured well.

That is, if the ratio of the diameter of the inner tube to the diameter of the reactor is 0.6 or more and 0.8 or less, the sectional area of a slurry downward flow region formed between the outer surface of the inner tube and the inner surface of the reactor is equal to or more than a predetermined value. Thereby, the slurry downward flow is secured well in this portion. As a result, the upward flow of the mixed fluid that is formed inside the inner tube and includes slurry and bubbles balances well with the downward flow that is formed outside the inner tube and formed mainly by the slurry. Consequently, a strong circulatory flow of the slurry including bubbles can be obtained.

If the ratio of the diameter of the inner tube to the diameter of the reactor becomes less than 0.6, since the sectional area inside the inner tube becomes substantially smaller than the sectional area between the inner tube and the inner surface of the reactor, the flow rate itself of the upward flow inside the inner tube decreases. Additionally, the arrangement area of the sparger which is set within the inner tube also becomes small. If the synthesis gas is jetted from the sparger in a predetermined amount when the arrangement area becomes small in this way, the flow velocity of the synthesis gas jetted increases, and along with this, the flow velocity of the mixed fluid of the synthesis gas and the slurry within the inner tube also increases. As a result, the pressure loss of the mixed fluid that flows within the inner tube increases, and the catalyst included in the mixed fluid is easily damaged.

On the other hand, if the ratio of the diameter of the inner tube to the diameter of the reactor exceeds 0.8, the sectional area of a slurry downward flow region formed between the outer surface of the inner tube and the inner surface of the reactor becomes too narrow. As a result, since the circulation flow rate of the slurry within the reactor decreases, it is difficult for the slurry to be stirred well. Additionally, as the flow velocity of the slurry downward flow increases, the flow path resistance of this slurry downward flow increases, and consequently, the catalyst included in the slurry is easily damaged.

Additionally, in the aforementioned hydrocarbon synthesis reaction apparatus, preferably, when the slurry including bubbles is diffused while spreading radially outward of the reactor from the upper end of the inner tube, the height of the upper end of the inner tube is set so that an intersecting portion between a virtual extension line defining the diffusion angle of the slurry with respect to a horizontal surface including an upper end surface of the inner tube and the inner surface of the reactor is lower than the liquid level of the slurry.

In this case, when the mixed fluid including bubbles flows further upward from the upper end of the inner tube, the mixed fluid is diffused radially outward of the reactor. Here, the height of the upper end of the inner tube is set so that the intersecting portion between the virtual extension line of the diffusion angle of the slurry and the inner surface of the reactor is lower than the liquid level of the slurry. Therefore, when the aforementioned mixed fluid including bubbles ascends while being diffused radially outward of the reactor from the upper end of the inner tube, a portion of the mixed fluid reaches the inner periphery of the reactor without reaching the liquid level of the slurry. That is, a part of the mixed fluid flows downward along the downward flow of the slurry while including bubbles, without reaching the liquid level of the slurry.

As a result, the region where the slurry including bubbles is present, that is, the region where the Fischer-Tropsch synthesis reaction occurs can be more widely secured.

### ADVANTAGEOUS EFFECTS OF THE INVENTION

According to the hydrocarbon synthesis reaction apparatus of the invention, the slurry can be stirred well, and the region where the Fischer-Tropsch synthesis reaction occurs can be widely secured without making the reactor larger.

### BRIEF DESCRIPTION OF THE DRAWINGS

FIG. 1 is a system diagram showing an overall configuration of a liquid fuel-synthesizing system including one embodiment of a hydrocarbon synthesis reaction apparatus related to the invention.
FIG. 2 is a schematic configuration view of a hydrocarbon-synthesizing reactor.
FIG. 3A is an action explanatory view showing the flow state of a slurry within the hydrocarbon-synthesizing reactor of the invention.
FIG. 3B is an action explanatory view showing the flow state of a slurry within a hydrocarbon-synthesizing reactor of the related art.
FIG. 4A is an action explanatory view showing the flow state of the slurry within the hydrocarbon-synthesizing reactor of the invention.
FIG. 4B is an action explanatory view of a case where synthesis gas is jetted from a whole region of the bottom of a hydrocarbon-synthesizing reactor that does not have an inner tube.
FIG. 4C is an action explanatory view of a case where synthesis gas is jetted from the center of the bottom of the hydrocarbon-synthesizing reactor that does not have the inner tube.
FIG. 5 is a graph obtained by comparing the ascent velocities of the slurries of middle portions in the respective hydrocarbon-synthesizing reactors shown in FIGS. 4A to 4C with each other.
FIG. 6 is a graph showing changes in the circulation flow rate of the slurry at the middle portion when the diameter of the inner tube is changed in the hydrocarbon-synthesizing reactor shown in FIG. 4A.
FIG. 7 is a graph showing changes in the flow velocity of the slurry flowing outside the inner tube when the diameter of the inner tube is changed in the hydrocarbon-synthesizing reactor shown in FIG. 4A.
FIG. 8 is a graph showing pressure losses while the slurry flowing outside the inner tube when the diameter of the inner tube is changed in the hydrocarbon-synthesizing reactor shown in FIG. 4A.
FIG. 9 is a graph showing pressure losses while the slurry flowing inside the inner tube when the diameter of the inner tube is changed in the hydrocarbon-synthesizing reactor shown in FIG. 4A.

### DETAILED DESCRIPTION OF THE INVENTION

Hereinafter, a hydrocarbon synthesis reaction apparatus of the present invention will be described in detail.

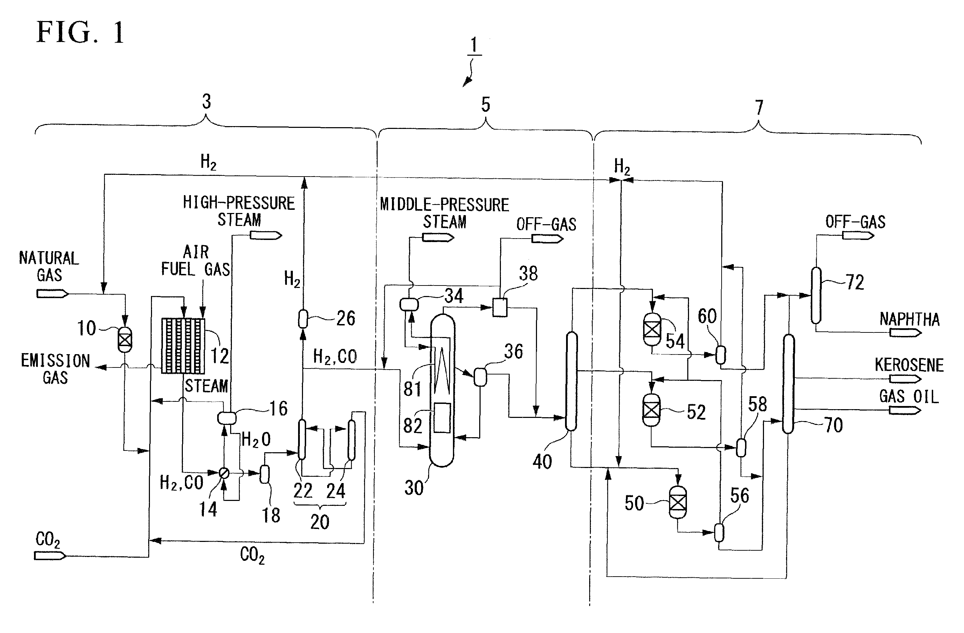

First, a liquid fuel-synthesizing system including an embodiment of the hydrocarbon synthesis reaction apparatus of the invention will be described with reference to FIG. 1.

A liquid fuel-synthesizing system 1 shown in FIG. 1 is a plant facility that executes a GTL process that converts hydrocarbon feedstock, such as natural gas, into liquid fuel.

The liquid fuel-synthesizing system 1 includes a synthesis gas production unit 3, an FT synthesis unit 5, and an upgrading unit 7. In the synthesis gas production unit 3, natural gas, which is a hydrocarbon feedstock, is reformed to produce synthesis gas including carbon monoxide gas and hydrogen gas. In the FT synthesis unit 5, liquid hydrocarbons are synthesized by the FT synthesis reaction from the synthesis gas produced in the synthesis gas production unit 3. In the upgrading unit 7, the liquid hydrocarbons synthesized by the FT synthesis reaction are hydrogenated and fractionated to produce base materials of liquid fuel (mainly kerosene and gas oil).

Hereinafter, constituent elements of these respective units will be described.

The synthesis gas production unit 3 mainly includes, for example, a desulfurization reactor 10, a reformer 12, a waste heat boiler 14, vapor-liquid separators 16 and 18, a CO₂ removal unit 20, and a hydrogen separator 26. The desulfurization reactor 10 is constituted by a hydrodesulfurizer or the like. In the desulfurization reactor 10, a sulfur compound is removed from natural gas as a feedstock. In the reformer 12, the natural gas supplied from the desulfurization reactor 10 is reformed to produce synthesis gas including carbon monoxide gas (CO) and hydrogen gas (H₂) as main components. In the waste heat boiler 14, waste heat of the synthesis gas produced by the reformer 12 is recovered to produce high-pressure steam.

In the vapor-liquid separator 16, the water heated by heat exchange with the synthesis gas in the waste heat boiler 14 is separated into gas (high-pressure steam) and liquid. In the vapor-liquid separator 18, a condensed component is removed from the synthesis gas cooled in the waste heat boiler 14, and a gas component is supplied to the CO₂ removal unit 20. The CO₂ removal unit 20 has an absorption tower 22 in which carbon dioxide gas is removed by using an absorbent from the synthesis gas supplied from the vapor-liquid separator 18, and a regeneration tower 24 in which the carbon dioxide gas is stripped from the absorbent including the carbon dioxide gas to regenerate the absorbent. In the hydrogen separator 26, a portion of the hydrogen gas included in the synthesis gas is separated from the synthesis gas from which the carbon dioxide gas has been separated by the CO₂ removal unit 20. It should be noted here that it is not necessary for the CO₂ removal unit 20 to be provided and is dependent on circumstances.

In the reformer 12, natural gas is reformed by using carbon dioxide gas and steam to produce high-temperature synthesis gas including carbon monoxide gas and hydrogen gas as main components, for example, by a steam and carbon-dioxide-gas-reforming method expressed by the following chemical reaction Formula (1) and (2). The reforming method in the reformer 12 is not limited to the example of the steam and carbon-dioxide-gas-reforming method. For example, a steam-reforming method, a partial oxidation-reforming method (POX) using oxygen, an auto-thermal-reforming method (ATR) that is a combination of the partial oxidation-reforming method and the steam-reforming method, the carbon dioxide gas-reforming method, and the like can also be utilized.

CH₄ + H₂O → CO + 3H₂ (1)

CH₄ + CO₂ → 2CO + 2H₂ (2)

The hydrogen separator 26 is provided on a branch line branching from a main line that connects the CO₂ removal unit 20 or the vapor-liquid separator 18 with a hydrocarbon-synthesizing reactor 30. Here, the hydrocarbon-synthesizing reactor 30 serves as the embodiment of the invention, and is a bubble column slurry bed reactor. The details of the hydrocarbon-synthesizing reactor will be described below.

The hydrogen separator 26 can be constituted by, for example, a hydrogen PSA (Pressure Swing Adsorption) device that perform adsorption and desorption of hydrogen by using a pressure difference. The hydrogen PSA device has adsorbents (zeolitic adsorbent, activated carbon, alumina, silica gel, or the like) within a plurality of adsorption columns (not shown) that are arranged in parallel. By sequentially repeating respective processes including pressurizing, adsorption, desorption (depressurizing), and purging of hydrogen in each of the adsorption columns, high-purity hydrogen gas (for example, about 99.999%) separated from the synthesis gas can be continuously supplied to various hydrogen-utilizing reaction devices (for example, the desulfurization reactor 10, a wax fraction-hydrocracking reactor 50, a middle distillate-hydrotreating reactor 52, a naphtha fraction-hydrotreating reactor 54, and the like) in which predetermined reactions are performed using hydrogen.

The hydrogen gas-separating method in the hydrogen separator 26 is not limited to the example of the pressure swing adsorption method as in the above hydrogen PSA device. For example, a hydrogen storing alloy adsorption method, a membrane separation method, or a combination thereof may also be used.

Next, the FT synthesis unit (hydrocarbon synthesis reaction apparatus) 5 that is the embodiment of the invention will be described. As shown in FIG. 1, FT synthesis unit 5 mainly includes the hydrocarbon-synthesizing reactor 30, a vapor-liquid separator 34, a catalyst separator 36, a vapor-liquid separator 38, and a first fractionator 40.

The hydrocarbon-synthesizing reactor 30 (hereinafter may be referred to as "reactor 30"), which is a bubble column slurry bed reactor that synthesizes liquid hydrocarbons from synthesis gas, functions as a FT synthesis reactor that synthesizes liquid hydrocarbons from synthesis gas by the FT synthesis reaction.

The reactor 30 mainly includes a cooling line 81, and an inner tube 82 arranged within a reactor main body 80, and is operated under the condition that the internal temperature thereof is maintained at, for example, about 190 to 270°C and the pressure thereof is higher than the atmospheric pressure. The reactor 30 is a substantially cylindrical metallic vessel.

A slurry having solid catalyst particles suspended in liquid hydrocarbons (product of the FT synthesis reaction) is held inside the reactor 30, and a slurry bed is formed of this slurry.

In a lower portion of the reactor 30, the synthesis gas including hydrogen gas and carbon monoxide gas as main components is jetted into the slurry from a sparger 83 arranged on the inner lower side of the inner tube 82. Then, the synthesis gas blown into the slurry is turned into bubbles, and ascends upward from below in the height direction (vertical direction) of the reactor 30 through the slurry within the inner tube 82. In such a process, the synthesis gas is dissolved in the liquid hydrocarbons and brought into contact with the catalyst particles, whereby a synthesis reaction (FT synthesis reaction) of the liquid hydrocarbons proceeds. Specifically, as shown in the following chemical reaction Formula (3), the hydrogen gas and the carbon monoxide gas react with each other to produce hydrocarbons.

2nH₂+nCO→(̵CH₂)̵ₙ+nH₂O (3)

Additionally, the synthesis gas ascends within the inner tube 82 as bubbles, whereby an upward flow (air lift) of the slurry is generated inside the reactor 30. That is, the slurry flows from the lower portion of the reactor 30 to an upper portion of the reactor 30 at a center portion (specifically, an inner side of the inner tube 82) of the reactor 30 and flows from the upper portion of the reactor 30 to the lower portion of the reactor 30 at an outer side of the inner tube 82. As a result, the circulatory flow of the slurry is generated inside the reactor 30.

In addition, a gaseous phase portion is provided at an upper portion of the slurry held within the reactor 30, and vapor-liquid separation is performed at an interface between this gaseous phase portion and the slurry. That is, the synthesis gas, which has passed through the interface between the slurry and the gaseous phase portion without reacting in the slurry, and the gaseous hydrocarbons, which are produced by the FT synthesis reaction and are relatively light under the conditions within the reactor 30, move to the gaseous phase portion as gas components. At this time, droplets accompanying the gas components and the catalyst particles accompanying the droplets are returned to the slurry due to gravity. Then, the gas components (the unreacted synthesis gas and the light hydrocarbons) that have ascended to the gaseous phase portion of the reactor 30 are extracted via a conduit connected to the gaseous phase portion (upper portion) of the reactor 30, and then discharged from the reactor 30. The gas component discharged from the reactor is supplied to the vapor-liquid separator 38 after being cooled, as will be described below.

The cooling line 81 is installed inside the reactor 30 to maintain the temperature within the system at a predetermined temperature by removing the reaction heat generated by the FT synthesis reaction throughout. In the present embodiment, a cooling section 81 A is configured by a bundle (cooling line bundle) which is formed by tubes of the cooling line 81. This bundle has a structure formed so that, for example, one pipe is bent and runs up and down multiple times along the vertical direction. One or a plurality of the cooling sections 81 A made of such bundles are arranged at predetermined intervals in the vertical direction (height direction) within the reactor 30.

In such a cooling section 81A, the cooling line 81 (bundle) is connected to the vapor-liquid separator 34 shown in FIG. 1 so that cooling water (for example, water whose difference from the temperature within the reactor 30 is about -50 to 0°C) supplied from the vapor-liquid separator 34 flows therethrough.

As the cooling water and the slurry exchange heat with each other via the wall of the cooling line 81 while the cooling water flows within the cooling line 81 of the cooling sections 81A, the slurry inside the reactor 30 is cooled down. A portion of the cooling water becomes steam, is discharged to the vapor-liquid separator 34, and is recovered as middle-pressure steam.

A medium for cooling down the slurry within the reactor 30 is not limited to the above cooling water. For example, straight-chain, branched-chain, and annular alkanes of C₄ to C₁₀, olefin, low-molecular-weight silane, silyl ether, silicon oil, or the like can be used.

In the vapor-liquid separator 34, the water heated by flowing through the cooling line 81 of the cooling section 81A disposed within the reactor 30 as described above is separated into steam (medium-pressure steam) and liquid. The liquid separated in the vapor-liquid separator 34 is supplied again to the cooling line 81 as the cooling water as mentioned above.

Although the catalyst that constitutes the slurry held in a reactor 30 is not particularly limited, a solid particulate catalyst in which at least one kind of active metal selected from cobalt, ruthenium, iron, and the like is supported on a carrier made of inorganic oxides, such as silica or alumina, can be preferably used. This catalyst may have a metal component, such as zirconium, titanium, hafnium, or rhenium, which is added for the purpose of, for example, enhancing the activity of the catalyst, other than the active metal. Although the shape of this catalyst is not particularly limited, a substantially spherical shape is preferable from the viewpoint of the flowability of the slurry and from the viewpoint of preventing the catalyst particles from collapsing and wearing thereby pulverizing catalyst particles, due to collision or friction between the catalyst particles or between the catalyst particles and the inner wall of the reactor 30, the cooling line 81, or the like.

Additionally, although the average particle diameter of the catalyst particles is not particularly limited, it is preferable from the viewpoint of the flowability of the slurry that the average particle diameter be about 40 to 150 µm.

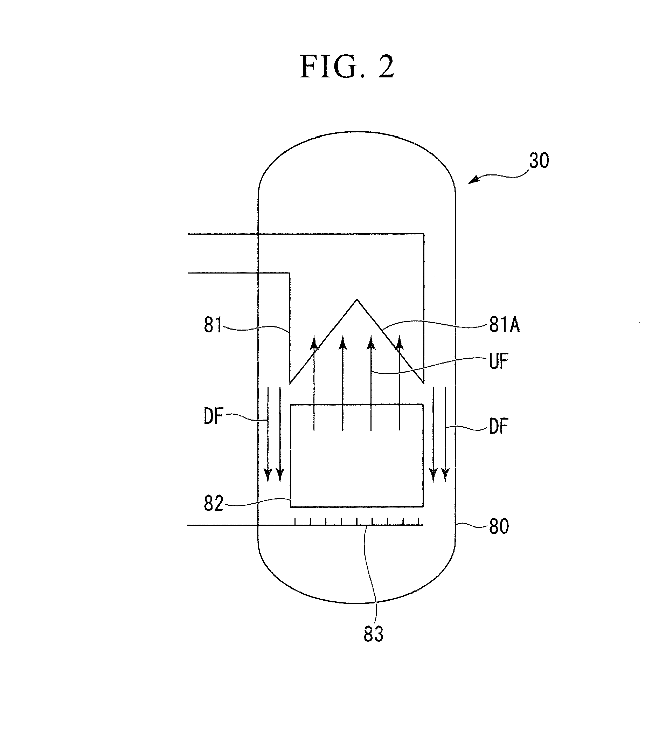

Such a slurry, as shown in FIG. 2, generates an upward flow UF that flows from the lower portion of the reactor 30 to the upper portion of the reactor 30 at the center portion (the inner side of the inner tube 82) of the reactor 30, and a downward flow DF that flows from the upper portion of the reactor 30 to the lower portion of the reactor 30 at the outer side of the inner tube 82. By generating such an upward flow UF and a downward flow DF, the circulatory flow is generated inside the reactor 30 as described above. In this circulatory flow, large flow velocity thereof is preferable, because the larger the velocity is, the better the slurry can be stirred. It is to be noted herein that the velocity is suffieciently large that powdering of the catalyst can proceed.

In the present embodiment, in order to increase the flow velocity of the circulatory flow of the slurry, the inner tube 82 is arranged within the reactor 30 so as to be immersed in the slurry and so as to be in a range from the bottom of the reactor 30 to the position of a middle portion of the reactor 30. Moreover, the sparger 83 is arranged only on an inner lower side of the inner tube 82.

The inner tube 82 has a cylindrical tube made of metal, ceramics, or the like, and is arranged at the center portion of the reactor 30 with upper and lower opening portions turned in the vertical direction (up-and-down direction) so that the central axis thereof coincides with the central axis of the reactor 30. Additionally, the inner tube 82 is arranged so that a lower end thereof has a predetermined gap from the bottom of the reactor main body. As a result, the upward flow of the slurry including bubbles formed as the synthesis gas is supplied from the sparger 83 mainly flows inside the inner tube 82, and the downward flow of the slurry mainly flows outside the inner tube 82. In addition, the position of the inner tube 82 is fixed by a fixing member (not shown) so as to prevent the position of the inner tube 82 from changing due to the flow of the slurry.

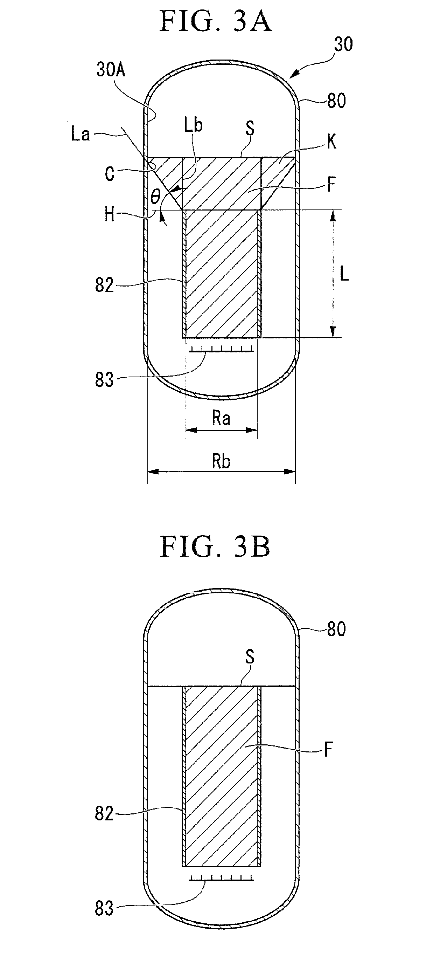

It is preferable that the height of an upper end of the inner tube 82 be higher than the liquid level of the slurry in order to secure the upward flow UF flowing from the lower portion of the reactor 30 to the upper portion of the reactor 30 well. In this case, however, a region where the synthesis gas comes into contact with the slurry, that is, a region where the FT synthesis reaction occurs is limited to an inner region of the inner tube 82, and consequently, the region F where the FT synthesis reaction occurs is narrowed (refer to FIG. 3B).

Thus, in this embodiment, as shown in FIG. 3A, when the slurry including bubbles is diffused while spreading radially outward of the reactor 30 from the upper end of the inner tube 82, the height of the upper end of the inner tube 82 is set so that an intersecting portion between a virtual extension line La defining the diffusion angle θ of the slurry with respect to a horizontal surface H including an upper end surface of the inner tube 82 and an inner surface of the reactor main body 80 is lower than the liquid level S of the slurry. As a result, a Fischer-Tropsch synthesis reaction region F, to which the slurry including bubbles flows out from the inside of the inner tube 82 through the upper end thereof, is also formed in a space K between a virtual extension portion Lb of the upper end of the inner tube 82 and the inner surface of the reactor main body 80.

Additionally, it is preferable that the height of the upper end of the inner tube 82 be lower than the cooling section 81 A in order to avoid interference with the cooling section 81A comprising the cooling line bundle.

Here, although the diffusion angle θ of the slurry also changes depending on the type of the catalyst, the temperature of the slurry, and the amount of the bubbles, the diffusion angle θ is within a range of about 60° < θ < 80° during normal operation.

Generally, in this type of reactor 30, the movement section, through which the bubbles introduced into the reactor by the sparger 83 have moved until the bubbles reach a predetermined height, is referred to as a run-up section which is necessary until the behavior of the bubbles is stabilized, and in which the flow of the slurry is also unstable. If the apparatus is large, this run-up section is estimated to be about 1 m. Early stabilization of the flow of the slurry can be achieved by surrounding this run-up section with the inner tube 82 and by accelerating the flow of the slurry accompanying the ascent of the bubbles. Accordingly, at least about 1 m in length is required for the length L of the inner tube 82.

Additionally, it is necessary to secure a flow way, through which the slurry can descend within the reactor 30, outside the inner tube 82. If the ratio of the internal diameter Ra of the inner tube 82 to the internal diameter Rb of the reactor 30 approaches 1.0, the sectional area of a flow way through which the slurry can descend and which is formed between an inner wall surface of the reactor 30 and an outer surface of the inner tube 82 becomes too narrow. For this reason, it is preferable that the ratio of internal diameter Ra of an inner tube 82 to the internal diameter Rb of the reactor 30 be equal to or less than 0.8. Additionally, it is necessary that the lower limit of this ratio be about 0.6. It is more preferable that the ratio be set to a range of 0.65 or more and 0.75 or less. By setting the ratio to such a range, the opening area of the inner tube 82 can be almost equal to the sectional area outside the inner tube 82, that is, the sectional area between the inner wall surface of the reactor 30 and the outer surface of the inner tube 82.

In a state where the upward flow (UF) of the slurry that ascends within the inner tube 82 and the downward flow (DF) of the slurry that descends outside the inner tube 82 are almost equal to each other in the aforementioned way, a large disturbance (bias) does not occur in the circulatory flow formed within the reactor 30, and the circulatory flow is stabilized. Additionally, in the slurry that ascends within the inner tube 82, the flow of the slurry and the flow of gas (bubbles) can be sufficiently accelerated. Accordingly, the slurry in the reactor 30 can be stirred well.

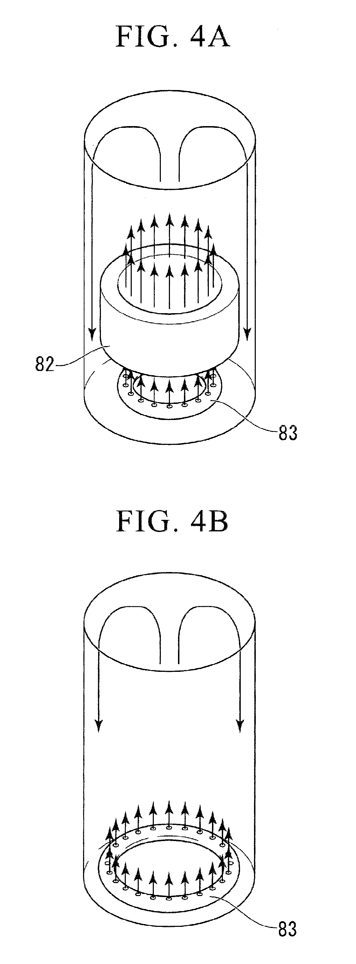

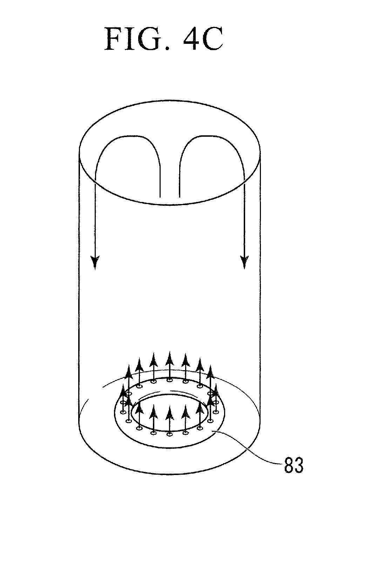

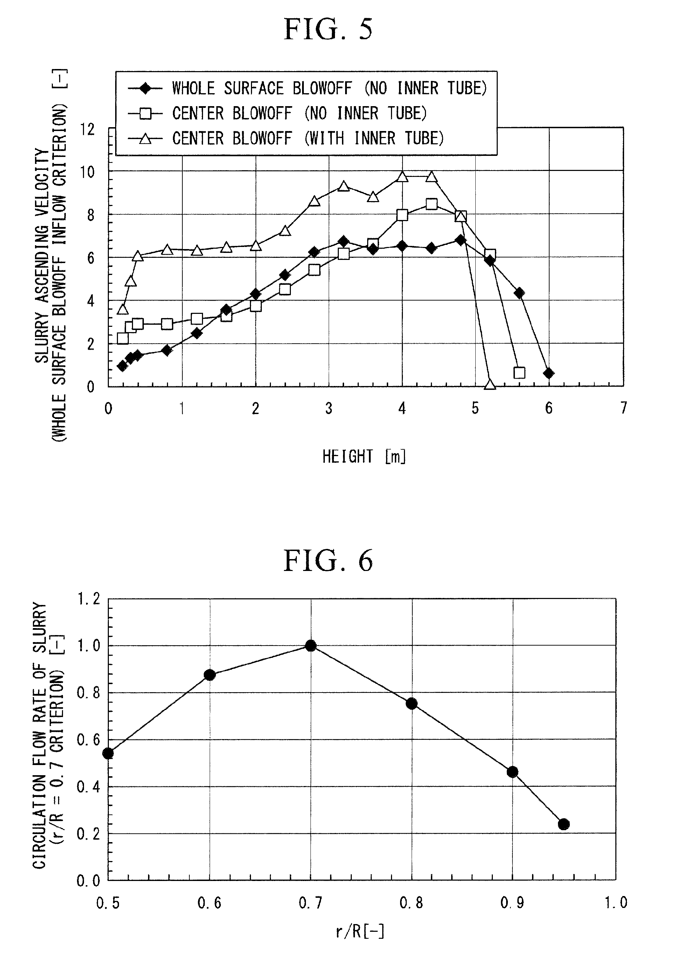

FIG. 6 is a graph showing changes in the flow rate of the slurry of the middle portion when the diameter of the inner tube is changed in the hydrocarbon-synthesizing reactor shown in FIG. 4A, and showing changes when the slurry circulation flow rate is 1 in a case where the ratio is 0.7.

As can be understood from the aforementioned drawing, the circulation flow rate of slurry decreases greatly if the ratio is more than 0.8 since the flow way through which the slurry can descend cannot be sufficiently secured outside the inner tube 82. Along with this, a large disturbance (bias) may also occur in the circulatory flow of the slurry.

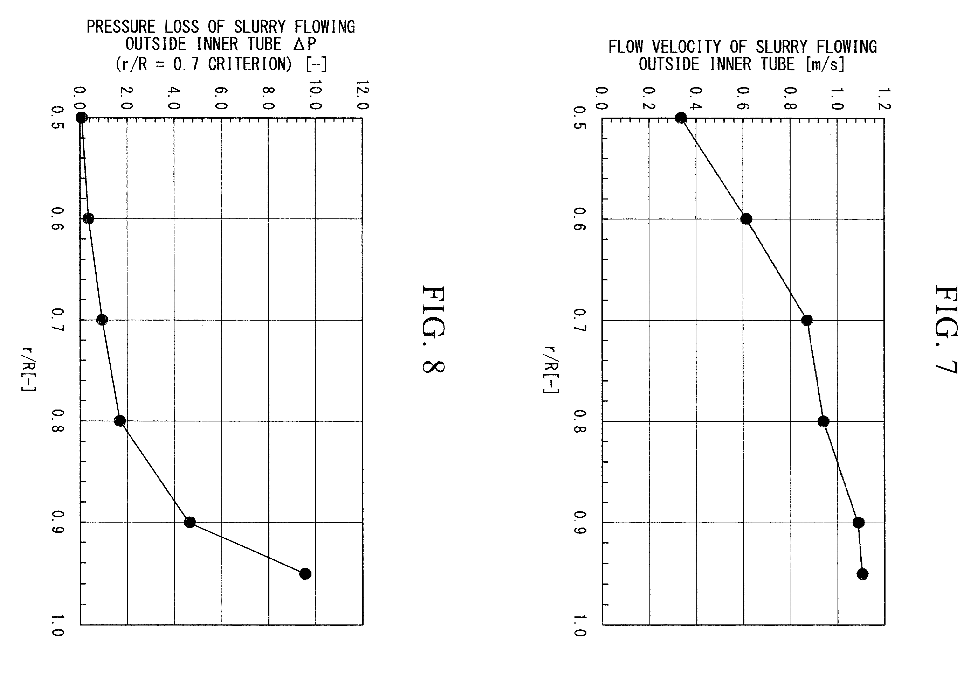

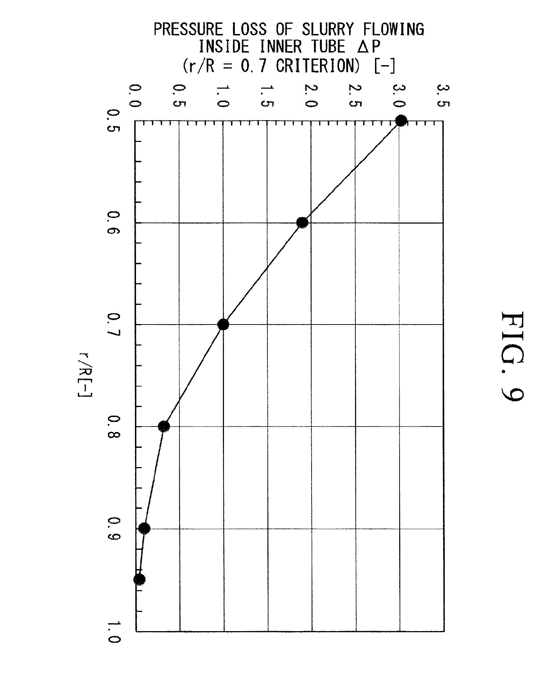

FIG. 7 is a graph showing changes in the flow velocity of the slurry flowing outside the inner tube when the diameter of the inner tube is changed in the hydrocarbon-synthesizing reactor shown in FIG. 4A. FIG. 8 is a graph showing pressure losses while the slurry flowing outside the inner tube when the diameter of the inner tube is changed in the hydrocarbon-synthesizing reactor shown in FIG. 4A. FIG. 9 is a graph showing pressure losses while the slurry flowing inside the inner tube when the diameter of the inner tube is changed in the hydrocarbon-synthesizing reactor shown in FIG. 4A.

As shown in FIG. 7, if the ratio exceeds 0.8, the flow velocity of the downward flow DF of the slurry outside the inner tube 82 increases. Along with this, as shown in FIG. 8, the pressure loss of the slurry that flows outside the inner tube 82 increases rapidly, and the catalyst included in the slurry becomes prone to be damaged.

In addition, if the ratio becomes smaller than 0.6, since it is difficult to introduce the gas in the slurry ascending within the reactor 30 into (flow into) a lower opening portion 82A of the inner tube 82, the flow rate of the upward flow UF of the slurry decreases. Additionally, although the sparger 83 is set within the inner tube 82, the arrangement area of the sparger 83 is small. If the synthesis gas is jetted from the sparger 83 in a predetermined amount (a certain amount) when the arrangement area becomes small in this way, the flow velocity of the synthesis gas jetted increases, and along with this, the flow velocity of the mixed fluid of the synthesis gas and the slurry within the inner tube 82 also increases. Moreover, the upward flow of the slurry is increased rapidly after reaching the upper end of the inner tube 82.

As a result, since the pressure loss of the mixed fluid that flows within the inner tube 82 increases rapidly as shown in FIG. 9, it becomes easier for the catalyst included in the mixed fluid to be damaged.

As shown in FIG. 1, in the catalyst separator 36, slurry is separated into a solid component, such as catalyst particles, and a liquid component including liquid hydrocarbons. A part of the solid component separated, such as catalyst particles, is returned to the hydrocarbon-synthesizing reactor 30, and the liquid component is supplied to the first fractionator 40. Additionally, FT gas components including unreacted synthesis gas (source gas) and a gas component of synthesized hydrocarbons are discharged from the top of the hydrocarbon-synthesizing reactor 30, and then are supplied to the vapor-liquid separator 38.

In the vapor-liquid separator 38, the FT gas components are cooled to separate liquid hydrocarbons (light FT hydrocarbons) which are a part of the condensed component, and the separated hydrocarbons are introduced to the first fractionator 40. On the other hand, the gas component separated in the vapor-liquid separator 38 includes the unreacted synthesis gas (CO and H₂) and the hydrocarbons with a carbon number of 2 or less as main components. A part of the gas component is introduced again into the bottom of the hydrocarbon-synthesizing reactor 30 to be reused for the FT synthesis reaction.

Additionally, the gas component that is not reused for the FT synthesis reaction is discharged to an off-gas side. Then, the discharged gas component is used as fuel gas, fuel equivalent to LPG (liquefied petroleum gas) is recovered therefrom, or the discharged gas component is reused for the feedstock of the reformer 12 of a synthesis gas production unit 3.

In the first fractionator 40, the liquid hydrocarbons, which are supplied via the catalyst separator 36 and the vapor-liquid separator 38 from the hydrocarbon-synthesizing reactor 30, are fractionally distilled into a naphtha fraction (with a boiling point that is lower than about 150°C), a middle distillate (with a boiling point that is about 150 to 360°C) equivalent to kerosene and gas oil, and a wax fraction (with a boiling point that is higher than about 360°C).

The liquid hydrocarbons of the wax fraction (mainly C₂₁ or more) discharged from the bottom of the first fractionator 40 are introduced into the wax fraction-hydrocracking reactor 50 of the upgrading unit 7 shown in FIG. 1. The liquid hydrocarbons of the middle distillate (mainly C₁₁ to C₂₀) discharged from a middle portion of the first fractionator 40 are introduced into the middle distillate-hydrotreating reactor 52 of the upgrading unit 7. The liquid hydrocarbons of the naphtha fraction (mainly C₅ to C₁₀) discharged from an upper portion of the first fractionator 40 are introduced into the naphtha fraction-hydrotreating reactor 54 of the upgrading unit 7.

As shown in FIG. 1, the upgrading unit 7 includes the wax fraction-hydrocracking reactor 50, the middle distillate-hydrotreating reactor 52, the naphtha fraction-hydrotreating reactor 54, vapor-liquid separators 56, 58, and 60, a second fractionator 70, and a naphtha stabilizer 72. The wax fraction-hydrocracking reactor 50 is connected with the bottom of the first fractionator 40. The middle distillate-hydrotreating reactor 52 is connected with the middle portion of the first fractionator 40. The naphtha fraction-hydrotreating reactor 54 is connected with the upper portion of the first fractionator 40. The vapor-liquid separators 56, 58, and 60 are provided corresponding to the hydrogenating reactors 50, 52, and 54, respectively. In the second fractionator 70, the liquid hydrocarbons supplied from the vapor-liquid separators 56 and 58 are fractionally distilled according to boiling points. In the naphtha stabilizer 72, liquid hydrocarbons of the naphtha fraction supplied from the vapor-liquid separator 60 and the second fractionator 70 are distilled, gas components of C₄ or less are recovered as fuel gas or discharged as flare gas, and components having a carbon number of five or more are recovered as a naphtha product.

Next, a process (GTL process) of synthesizing liquid fuel from natural gas by the liquid fuel-synthesizing system 1 configured as above will be described.

Natural gas (the main component of which is CH₄) as a hydrocarbon feedstock is supplied to the liquid fuel-synthesizing system 1 from an external natural gas supply source (not shown), such as a natural gas field or a natural gas plant. The synthesis gas production unit 3 reforms this natural gas to produce synthesis gas (mixed gas including carbon monoxide gas and hydrogen gas as main components).

First, the natural gas is supplied to the desulfurization reactor 10 together with the hydrogen gas separated by the hydrogen separator 26. In the desulfurization reactor 10, a sulfur compound included in the natural gas is hydrogenated by using the hydrogen gas with a well-known hydrodesulfurization catalyst to be converted into hydrogen sulfide. This hydrogen sulfide is absorbed and removed by using an adsorbent, such as zinc oxide, thereby desulfurizing the natural gas. Since the natural gas is desulfurized in advance in this way, it is possible to prevent the activity of catalysts used in the reformer 12, the hydrocarbon-synthesizing reactor 30, the upgrading unit 7, and the like from decreasing due to the sulfur compound.

The natural gas (may also include carbon dioxide) desulfurized in the aforementioned way is supplied to the reformer 12 after the carbon dioxide (CO₂) gas supplied from a carbon-dioxide gas supply source (not shown) and the steam generated in the waste heat boiler 14 are mixed with each other. In the reformer 12, natural gas is reformed using carbon dioxide gas and steam, for example, by the steam and carbon-dioxide-gas-reforming method, to produce high-temperature synthesis gas including carbon monoxide gas and hydrogen gas as main components. At this time, for example, fuel gas and air for a burner disposed in the reformer 12 are supplied to the reformer 12, and the reaction heat, which is required for the above steam and carbon-dioxide-gas-reforming reaction that is an endothermic reaction, are provided by the combustion heat of the fuel gas in the burner and the radiant heat in the furnace of the reformer 12.

The high-temperature synthesis gas (for example, 900°C, 2.0 MPaG) produced in the reformer 12 in this way is supplied to the waste heat boiler 14, and is cooled by the heat exchange with water that flows through the waste heat boiler 14 (for example, 400°C) whereby the waste heat is recovered. At this time, the water heated by the synthesis gas in the waste heat boiler 14 is supplied to the vapor-liquid separator 16. From this vapor-liquid separator 16, a gas component is supplied to the reformer 12 or other external devices as high-pressure steam (for example, 3.4 to 10.0 MPaG), and the water as a liquid component is returned to the waste heat boiler 14.

On the other hand, the synthesis gas cooled in the waste heat boiler 14 is supplied to the absorption tower 22 of the CO₂ removal unit 20, or the hydrocarbon-synthesizing reactor 30, after a condensed liquid component of the synthesis gas is separated and removed in the vapor-liquid separator 18. In the absorption tower 22, the stored absorbent absorbs the carbon dioxide gas included in the synthesis gas to separate the carbon dioxide gas from the synthesis gas. The absorbent including the carbon dioxide gas within the absorption tower 22 is introduced into the regeneration tower 24, the absorbent including the carbon dioxide gas is heated by, for example, steam, and then subjected to stripping treatment. The carbon dioxide gas stripped from the absorbent by the stripping treatment is sent to the reformer 12 from the regeneration tower 24 and is reused for the above reforming reaction.

The synthesis gas produced in the synthesis gas production unit 3 in this way is supplied to the hydrocarbon-synthesizing reactor 30 of the above FT synthesis unit 5. At this time, the composition ratio of the synthesis gas supplied to the hydrocarbon-synthesizing reactor 30 is adjusted to a composition ratio (for example, H₂ : CO = 2 : 1 (molar ratio)) suitable for the FT synthesis reaction.

Additionally, a part of the synthesis gas from which the carbon dioxide gas has been separated by the above CO₂ removal unit 20 is also supplied to the hydrogen separator 26. In the hydrogen separator 26, the hydrogen gas is separated from the synthesis gas, by adsorption and desorption utilizing a pressure difference (hydrogen PSA). This separated hydrogen gas is continuously supplied from a gas holder (not shown) or the like via a compressor (not shown) to various hydrogen-utilizing reaction units (for example, the desulfurization reactor 10, the wax fraction-hydrocracking reactor 50, the middle distillate-hydrotreating reactor 52, the naphtha fraction-hydrotreating reactor 54, and the like) to perform predetermined reactions, utilizing the hydrogen within the liquid fuel-synthesizing system 1.

Next, in the above FT synthesis unit 5, hydrocarbons are synthesized by the FT synthesis reaction from the synthesis gas produced by the above synthesis gas production unit 3.

The synthesis gas produced in the synthesis gas production unit 3 flows into the hydrocarbon-synthesizing reactor 30 from the bottom thereof via the sparger 83.

In the present embodiment, the sparger 83 is arranged only on the inner lower side of the inner tube 82 that is a part of the bottom of the reactor 30 instead of the whole region of bottom of the reactor 30, and the synthesis gas is jetted from the sparger 83. The jetted synthesis gas is mixed with the slurry within the inner tube 82. Since this mixed fluid has low specific gravity compared to the slurry that does not include bubbles, the mixed fluid forms the upward flow UF within the inner tube. When the ascending mixed fluid reaches the liquid level of the slurry, most bubbles escape from the mixed fluid. The mixed fluid from which most bubbles have escaped has almost the same specific gravity as that of the slurry. As a result, the mixed fluid forms the downward flow DF that is directed downward outside the inner tube 82, that is, at a position near the inner surface of the reactor.

In this way, in the present embodiment, the circulatory flow including the upward flow at the center position of the reactor 30 and the downward flow at the position near the inner surface of the reactor is formed. This circulatory flow becomes a flow that is stronger than that in the whole surface blowoff of jetting the synthesis gas from the whole region of the bottom of the reactor 30. Therefore, the slurry can be stirred well by the circulatory flow of this strong flow.

Additionally, when the mixed fluid including bubbles flows further upward from the upper end of the inner tube 82, as shown in FIG. 3A, the mixed fluid ascends while being diffused also radially outward of the reactor 30 at a predetermined diffusion angle θ. The mixed fluid diffused radially outward of the reactor 30 is reversed in flow and flows downward without reaching the liquid level of the slurry, since the mixed fluid is caught in the downward flow outside the inner tube 82, that is, at a position near the inner surface of the reactor 30. That is, the slurry including bubbles flows out from the inside of the inner tube 82 to the space K between the virtual extension portion of the upper end of the inner tube 82 and the inner surface of the reactor main body 80 through the upper end of the inner tube 82, whereby this region also becomes the Fischer-Tropsch synthesis reaction region F.

That is, the Fischer-Tropsch synthesis reaction region F is formed not only on the inside of the inner tube 82 but also on the outside of the inner tube 82. As a result, the region where the Fischer-Tropsch synthesis reaction occurs can be widely secured.

In addition, for comparison, an action explanatory view of a reactor including a related-art inner tube which extends to the liquid level of a slurry is shown in FIG. 3B. As shown in this view, in the reactor including the related-art inner tube, the region F where the synthesis gas supplied from a lower side of a draft tube comes into contact with the slurry, that is, the region where the FT synthesis reaction occurs, is limited to an inner region of the draft tube.

The synthesis gas ascends as bubbles within the hydrocarbon-synthesizing reactor 30 in the aforementioned way. The slurry also ascends with the synthesis gas and forms a circulatory flow, whereby carbon monoxide and hydrogen gas included in the synthesis gas react with each other, and hydrocarbons are generated by the aforementioned FT synthesis reaction.

The liquid hydrocarbons synthesized in the hydrocarbon-synthesizing reactor 30 are introduced into the catalyst separator 36 together with the catalyst particles as slurry.

In the catalyst separator 36, slurry is separated into a solid component, such as catalyst particles, and a liquid component including liquid hydrocarbons. A part of the separated solid component, such as the catalyst particles, is returned to the hydrocarbon-synthesizing reactor 30, and the separated liquid component is supplied to the first fractionator 40.

Additionally, FT gas components including a gas component of unreacted synthesis gas (feedstock gas) and synthesized hydrocarbons are discharged from the top of the hydrocarbon-synthesizing reactor 30, and then are supplied to the vapor-liquid separator 38.

In the vapor-liquid separator 38, the FT gas components are cooled to separate liquid hydrocarbons (light FT hydrocarbons) which are a part of the condensed component, and then the separated hydrocarbons are introduced to the first fractionator 40. On the other hand, the gas component separated in the vapor-liquid separator 38 includes the unreacted synthesis gas (CO and H₂) and the hydrocarbons with a carbon number of 2 or less as main components. A part of the gas component is introduced again into the bottom of the hydrocarbon-synthesizing reactor 30 to be reused for the FT synthesis reaction.

Additionally, the gas component that has not been reused for the FT synthesis reaction is discharged to an off-gas side. Then, the discharged gas component is used as fuel gas, fuel equivalent to LPG (liquefied petroleum gas) is recovered therefrom, or the discharged gas component is reused for the feedstock of the reformer 12 of the synthesis gas production unit 3.

Next, in the first fractionator 40, the liquid hydrocarbons, which are supplied via the catalyst separator 36 and the vapor-liquid separator 38 from the hydrocarbon-synthesizing reactor 30 as described above, are fractionally distilled into a naphtha fraction (with a boiling point that is lower than about 150°C), a middle distillate (with a boiling point that is about 150 to 360°C), and a wax fraction (with a boiling point that is higher than about 360°C).

The liquid hydrocarbons (mainly C₂₁ or more) of the wax fraction discharged from the bottom of the first fractionator 40 are introduced into the wax fraction-hydrocracking reactor 50. The liquid hydrocarbons (mainly C₁₁ to C₂₀) of the middle distillate discharged from the middle portion of the first fractionator 40 are introduced into the middle distillate-hydrotreating reactor 52. The liquid hydrocarbons of the naphtha fraction (mainly C₅ to C₁₀) discharged from the upper portion of the first fractionator 40 are introduced into the naphtha fraction-hydrotreating reactor 54.

In the wax fraction-hydrocracking reactor 50, the liquid hydrocarbons of the wax fraction with a large carbon number (approximately C₂₁ or more), which are supplied from the bottom of the first fractionator 40, are hydrocracked by using the hydrogen gas supplied from the above hydrogen separator 26, to reduce the carbon number of the hydrocarbons to C₂₀ or less. In this hydrocracking reaction, the hydrocarbons with a small carbon number are produced by breaking C-C bonds of the hydrocarbons with a large carbon number, using a catalyst and heat. A product including the liquid hydrocarbons hydrocracked in the wax fraction-hydrocracking reactor 50 is separated into gas and liquid in the vapor-liquid separator 56. The liquid hydrocarbons separated from the product are introduced into the second fractionator 70, and the gas component (including hydrogen gas) separated from the product is introduced into the middle distillate-hydrotreating reactor 52 and the naphtha fraction-hydrotreating reactor 54.

In the middle distillate-hydrotreating reactor 52, the liquid hydrocarbons of the middle distillate, which are supplied from the middle portion of the first fractionator 40 and have a mid-range carbon number (approximately C₁₁ to C₂₀), are hydrotreated by using the hydrogen gas supplied via the wax fraction-hydrocracking reactor 50 from the hydrogen separator 26. In this hydrotreating reaction, in order to obtain branched saturated hydrocarbons to improve the low-temperature flowability as a fuel oil base material, the liquid hydrocarbons are hydroisomerized, and the unsaturated hydrocarbons included in the above liquid hydrocarbons are hydrogenated to obtain saturated hydrocarbons. Moreover, oxygenated compounds, such as alcohols included in the above hydrocarbons, are hydrogenated and converted into saturated hydrocarbons. A product including the liquid hydrocarbons hydrotreated in this way is separated into gas and liquid in the vapor-liquid separator 58. The liquid hydrocarbons separated from the product are introduced into the second fractionator 70, and the gas component (including hydrogen gas) separated from the product is reused for the above hydrogenation reactions.

In the naphtha fraction-hydrotreating reactor 54, liquid hydrocarbons of the naphtha fraction with a small carbon number (approximately C₁₀ or less), which are supplied from the upper portion of the first fractionator 40, are hydrotreated by using the hydrogen gas supplied via the wax fraction-hydrocracking reactor 50 from the hydrogen separator 26. As a result, unsaturated hydrocarbons and oxygenated compounds, such as alcohols, included in the naphtha fraction supplied thereto, are converted into saturated hydrocarbons. A product including the liquid hydrocarbons hydrotreated in this way is separated into gas and liquid in the vapor-liquid separator 60. The liquid hydrocarbons separated from the product are introduced into the naphtha stabilizer 72, and the gas component (including hydrogen gas) separated from the product is reused for the above hydrogenation reactions.

In the second fractionator 70, the liquid hydrocarbons, which are hydrocracked and hydrotreated in the wax fraction-hydrocracking reactor 50 and the middle distillate-hydrotreating reactor 52, respectively, and which are supplied therefrom as described above, are fractionally distilled into hydrocarbons with a carbon number of C₁₀ or less (with a boiling point that is lower than about 150°C), a kerosene fraction (with a boiling point that is about 150 to 250°C), a gas oil fraction (with a boiling point that is about 250 to 360°C), and an uncracked wax fraction (with a boiling point that is higher than about 360°C) supplied from the wax fraction-hydrocracking reactor 50. The gas oil fraction is discharged from a lower portion of the second fractionator 70, and the kerosene fraction is discharged from a middle portion of the second fractionator 70. The hydrocarbons with a carbon number of C₁₀ or less are discharged from the top of the second fractionator 70, and are supplied to the naphtha stabilizer 72.

Moreover, in the naphtha stabilizer 72, the hydrocarbons with a carbon number of C₁₀ or less, which are supplied from the above naphtha fraction-hydrotreating reactor 54 and the second fractionator 70, are distilled to separate and fractionate naphtha (C₅ to C₁₀) as a product. As a result, high-purity naphtha is discharged from the bottom of the naphtha stabilizer 72. On the other hand, gas, which includes hydrocarbons with a carbon number equal to or less than a predetermined number (C₄ or less) as a main component and which are not a target product, is recovered as fuel gas or discharged as flare gas from the top of the naphtha stabilizer 72.

According to the hydrocarbon synthesis reaction apparatus of the present embodiment, the cylindrical inner tube 82 is arranged within the reactor 30 so as to be immersed in the slurry, and the sparger 83 for blowing the synthesis gas is arranged on the inner lower side of the inner tube 82. In addition, the Fischer-Tropsch synthesis reaction region F, where the slurry including bubbles flows out from the inside of the inner tube 82 through the upper end thereof, is formed in the space K between the virtual extension portion Lb of the upper end of the inner tube 82 and the inner surface of the reactor main body 80. Therefore, the circulatory flow including the upward flow at the center position of the reactor 30 and the downward flow at the position near the inner surface of the reactor is formed, and this circulatory flow becomes a flow that is stronger than that in the whole surface blowoff in which the synthesis gas is jetted from the whole region of the bottom of the reactor. The slurry can be stirred well by the circulatory flow of this strong flow, and simultaneously, the region F where the Fischer-Tropsch synthesis reaction occurs is formed not only inside the inner tube 82 but also outside the inner tube 82. As a result, the region F where the Fischer-Tropsch synthesis reaction region occurs can be widely secured.

Although the embodiment of the invention has been described above in detail with reference to the drawings, specific configuration is not limited to the embodiment, and design may be changed within the scope not departing from the gist of the invention.

For example, although the inner tube 82 is cylindrical in the above embodiment, the inner tube is not limited to this and may be formed in a substantially tubular shape with a polygonal cross-section. In that case, a tube with an arbitrary polygonal cross-section, such as a quadrangular or a hexagonal cross-section, can be used.

Additionally, the inner tube 82 may be formed so that the upper end of the inner tube 82 spreads outward in the shape of a U-shaped cross-section. In this case, the upward flow UF inside the inner tube 82 can be more easily spread radially outward from the upper end of the inner tube 82. As a result, the region F where the Fischer-Tropsch synthesis reaction occurs can be further increased.

### EXAMPLES

As shown in FIGS. 4A to 4C, the hydrocarbon-synthesizing reactor of the present embodiment (which contains the center blowoff and an inner tube), a hydrocarbon-synthesizing reactor in which the synthesis gas is jetted from the whole region of the bottom thereof and the inner tube is not installed, and a hydrocarbon-synthesizing reactor in which a synthesis gas is jetted from the bottom center thereof and the inner tube is not installed, were prepared. The flow velocities of slurries including bubbles were measured at middle portions of each of the reactors.

A diameter Ra of the inner tube in this case was 1.4 m and a height L thereof was 2 m.

The length from the upper end of the inner tube to the liquid level of the slurry was 5 m at initial liquid level and was 5.5 m to 6.5 m during operation.

The results are shown in FIG. 5. FIG. 5 shows velocities of the slurry at predetermined heights in each of the reactors, wherein the velocities are shown as the ratio of the velocities of the slurry at the predetermined heights to the velocity of the slurry at the inlet port of the synthesis gas of the reactor shown in FIG. 4B.

As can be understood from this drawing, high flow velocity was obtained in the hydrocarbon-synthesizing reactor of the present embodiment, compared to the hydrocarbon-synthesizing reactor in which the synthesis gas was jetted from the whole region of the bottom thereof and the inner tube was not installed, and a hydrocarbon-synthesizing reactor in which the synthesis gas from the bottom center thereof and the inner tube was not installed.

Additionally, in the hydrocarbon-synthesizing reactor of the present embodiment, the flow rate of the slurry including bubbles was measured at the middle portion of the reactor when the diameter of the inner tube was changed.

The diameters Ra of the inner tubes were 1.0 m, 1.2 m, 1.4 m, 1.6 m, 1.8 m, and 1.9 m and the heights L of the inner tubes were 2.0 m. The lengths from the upper end of each inner tube to the liquid level of the slurry were 5 m at initial liquid level and were 5.5 m to 6.5 m during operation. An internal diameter (diameter) of the reactor was 2 m.

The results are shown in FIG. 6. FIG. 6 shows circulation flow rates of the slurry in the reactor when the ratio (r/R) of the inner diameter r of the inner tube to inner diameter R of the reactor was changed, wherein the circulation flow rates are shown as the ratio of the circulation rates of the slurry in the reactor to the circulation rate of the slurry in the reactor at r/R = 0.7.

Additionally, FIGS. 7 to 9 show changes in the flow velocity of the slurry flowing outside the inner tubes, changes in pressure loss when the slurry flows outside the inner tubes, and changes in pressure loss when the slurry flows inside the inner tubes, under the same conditions as those under which the data of FIG. 6 was taken.

### INDUSTRIAL APPLICABILITY

The invention can be used for the hydrocarbon-synthesizing reactor for producing hydrocarbons in the Fischer-Tropsch synthesis reaction.

### DESCRIPTION OF THE REFERENCE SIGNS

1: LIQUID FUEL-SYNTHESIZING SYSTEM
5: FT SYNTHESIS UNIT
30: HYDROCARBON-SYNTHESIZING REACTOR (REACTOR)
80: REACTOR MAIN BODY
81: COOLING LINE
81A: COOLING SECTION
82: INNER TUBE
83: SPARGER
F, K: FISCHER-TROPSCH SYNTHESIS REACTION REGION

## Claims

1. A hydrocarbon synthesis reaction apparatus comprising:
a reactor that brings a synthesis gas including carbon monoxide gas and hydrogen gas as main components into contact with a slurry having a solid catalyst suspended in liquid hydrocarbons to synthesize hydrocarbons by the Fischer-Tropsch synthesis reaction;
a cylindrical inner tube having a lower end arranged within the reactor at a predetermined distance from the bottom of the reactor; and
a sparger that is arranged on an inner lower side of the inner tube and blows the synthesis gas toward the inside of the inner tube,
wherein a Fischer-Tropsch synthesis reaction region, to which the slurry including bubbles flows out from the inside of the inner tube through an upper end of the inner tube, is formed in a space between a virtual extension portion of the upper end of the inner tube and an inner surface of the reactor, in a state where the slurry is held within the reactor until the upper end of the inner tube is lower than the liquid level of the slurry.

2. The hydrocarbon synthesis reaction apparatus according to Claim 1,
wherein the ratio of the diameter of the inner tube to the diameter of the reactor is 0.6 or more and 0.8 or less.

3. The hydrocarbon synthesis reaction apparatus according to Claim 1 or 2,
wherein when the slurry including bubbles is diffused while spreading radially outward of the reactor from the upper end of the inner tube, the height of the upper end of the inner tube is set so that an intersecting portion between a virtual extension line defining the diffusion angle of the slurry with respect to a horizontal surface including an upper end surface of the inner tube and the inner surface of the reactor is lower than the liquid level of the slurry.
